# EUROPEAN PATENT APPLICATION

(11) **EP 4 746 085 A1**
(43) Date of publication of application: **20.05.2026**
(21) Application number: 24847887.7
(22) Date of filing: 27.06.2024
(51) Int. Cl.: H01M 8/04119, H01M 8/04089

(54) **GAS-LIQUID SEPARATOR AND DRAINAGE CONTROL METHOD THEREFOR**

(30) Priority: 28.07.2023 CN 202310940744
(71) Applicant: Dongfeng Motor Group Co., Ltd., Wuhan, Hubei 430000 (CN)
(72) Inventor: SHI, Mingtao, Wuhan, Hubei 430000 (CN); LI, Xuerui, Wuhan, Hubei 430000 (CN); ZHANG, Jian, Wuhan, Hubei 430000 (CN); HUANG, Hao, Wuhan, Hubei 430000 (CN); ZHANG, Mingkai, Wuhan, Hubei 430000 (CN)
(74) Representative: Santarelli
(86) International application number: PCT/CN2024/101806
(87) International publication number: WO 2025/025926

(57) **Abstract**

Embodiments of the present application relate to the technical field of fuel cell vehicles, and provide a gas-liquid separator and a drainage control method therefor. The gas-liquid separator comprises: a gas-liquid separator body; a gas-liquid separation part and a liquid collecting part are provided in the gas-liquid separator body from top to bottom; at least two water baffles are arranged between the gas-liquid separation part and the liquid collecting part; the at least two water baffles are distributed in a staggered manner in the longitudinal direction to form a water passing gap, so that liquid separated by the gas-liquid separation part flows into the liquid collecting part from the water passing gap; and a common projection surface formed by downward projections of the water baffles covers the surface of the liquid collecting part. According to the technical solution of the present application, at least two water baffles distributed in a staggered manner in the longitudinal direction solve the problem of splashing of droplets in a liquid collecting part caused when an automobile drives on a bumpy road.

## Description

### CROSS-REFERENCE TO RELATED APPLICATIONS

The present application claims priority to Chinese Patent Application No. 202310940744.0, filed on July 28, 2023, which is incorporated herein by reference in its entirety.

### Technical Field

The present application relates to the technical field of fuel cell vehicles, and in particular, to a gas-liquid separator and a drainage control method therefor.

### Background of the Invention

Water is generated at a cathode of a hydrogen fuel cell in the electrochemical reaction process. The water produced at the cathode is transported to an anode via diffusion, resulting in saturated hydrogen humidity at an anode outlet and possible entrainment of a small amount of water droplets. To improve hydrogen utilization efficiency, residual hydrogen after the reaction needs to be delivered back to a stack through a circulation device for further reaction. The water entrained in the hydrogen at the anode outlet enters a hydrogen circulation loop, which will lead to anode flooding, a reduction in fuel cell efficiency, a decrease in fuel cell service life, and permanent performance degradation. Therefore, a gas-liquid separator is required to achieve efficient separation of liquid droplets in the hydrogen loop, so as to ensure the normal operation and durable service life of the fuel cell.

When a vehicle is driving on a bumpy road, a water baffle installed in an existing gas-liquid separator cannot effectively block liquid droplets splashing from a liquid collecting part. Therefore, designing a gas-liquid separator capable of effectively blocking the liquid droplets splashing from the liquid collecting part has become an urgent technical problem to be solved at present.

### Summary of the Invention

Technical solutions of the present application provide a gas-liquid separator and a drainage control method therefor, so as to solve the problem of liquid droplets splashing from a liquid collecting part when a vehicle is driving on a bumpy road.

Features and advantages of the present application will become apparent from the following detailed description, or may be partially learned through the practice of the present application.

The gas-liquid separator of the present application can effectively block the liquid droplets splashing from the liquid collecting part by means of two water baffles arranged in an up-down staggered manner.

In a first aspect, the technical solutions of the present application provide a gas-liquid separator, including:
a gas-liquid separator body, where a gas-liquid separation part and a liquid collecting part are provided in the gas-liquid separator body from top to bottom; at least two water baffles are arranged between the gas-liquid separation part and the liquid collecting part; and
the at least two water baffles are distributed in a staggered manner in a longitudinal direction to form a water passing gap, so that liquid separated by the gas-liquid separation part flows into the liquid collecting part from the water passing gap.

A common projection surface formed by downward projections of the water baffles covers a surface of the liquid collecting part.

Based on the aforementioned solution, some preferred technical solutions of the present application include the following: the at least two water baffles include a first water baffle and a second water baffle, and ends of the first water baffle and the second water baffle that are close to each other are inclined downward and arranged in a staggered manner, thereby forming the water passing gap.

Based on the aforementioned solution, some preferred technical solutions of the present application include the following: at least one water separation plate is arranged inside the gas-liquid separation part, the at least one water separation plate forms a communicating flow channel inside the gas-liquid separation part, and the communicating flow channel is used for accelerating gas-liquid separation.

Based on the aforementioned solution, some preferred technical solutions of the present application include the following: a first water separation plate, a second water separation plate, a third water separation plate, and a fourth water separation plate are arranged inside the gas-liquid separation part; the first water separation plate is arranged longitudinally and forms a longitudinal flow channel together with a longitudinal inner wall of the gas-liquid separator body; the second water separation plate, the third water separation plate, and the fourth water separation plate are arranged transversely; the second water separation plate and the at least two water baffles form a first transverse flow channel; the third water separation plate and the second water separation plate form a second transverse flow channel; the fourth water separation plate and the third water separation plate form a third transverse flow channel; an transverse inner wall of the gas-liquid separator body and the fourth water separation plate form a fourth transverse flow channel; the longitudinal flow channel, the first transverse flow channel, the second transverse flow channel, the third transverse flow channel, and the fourth transverse flow channel are communicated in sequence, thus forming the communicating flow channel.

Based on the aforementioned solution, some preferred technical solutions of the present application include the following: each of the water separation plates is provided with a drag-reducing curved surface.

Based on the aforementioned solution, some preferred technical solutions of the present application further include a liquid level detection device, and the liquid level detection device is arranged at least above at least one water baffle adjacent to the liquid collecting part.

Based on the aforementioned solution, some preferred technical solutions of the present application include the following: the liquid level detection device is arranged at least above a connecting end of at least one water baffle adjacent to the liquid collecting part, and the connecting end refers to one end where the at least one water baffle is connected to the gas-liquid separator body.

Based on the aforementioned solution, some preferred technical solutions of the present application include the following: a nitrogen discharge port is opened on one side of the gas-liquid separation part; a nitrogen discharge control assembly is arranged on the nitrogen discharge port, and the nitrogen discharge control assembly at least comprises a heating nitrogen discharge valve.

Based on the aforementioned solution, some preferred technical solutions of the present application include the following: a liquid discharge port is opened on one side of the liquid collecting part; a liquid discharge control assembly is arranged on the liquid discharge port, and the liquid discharge control assembly at least comprises a heating liquid discharge valve.

In a second aspect, the technical solutions of the present application further provide a drainage control method for the gas-liquid separator. The method is used to control the gas-liquid separator according to the aforementioned first aspect, and the method includes:
acquiring a liquid level signal inside the gas-liquid separator body; if a liquid level inside the gas-liquid separator body exceeds a preset liquid level, controlling the liquid collecting part to perform drainage; and
acquiring a sudden pressure drop signal inside the gas-liquid separator body, and controlling the liquid collecting part to stop drainage according to the sudden pressure drop signal.

According to the technical solution of the present application, at least two water baffles distributed in a staggered manner in the longitudinal direction solve the problem of splashing of droplets in a liquid collecting part caused when an automobile drives on a bumpy road.

It should be understood that the foregoing general description and the following detailed description are merely exemplary and explanatory and do not limit the present application.

### Brief Description of the Drawings

The accompanying drawings herein are incorporated into and constitute a part of the specification, illustrate embodiments consistent with the present application, and together with the specification, serve to explain the principles of the present application. Apparently, the accompanying drawings in the following description show merely some embodiments of the present application, and a person of ordinary skill in the art may still derive other drawings from these accompanying drawings without creative efforts. In the accompanying drawings:
FIG. 1 shows a schematic structural diagram of a gas-liquid separator according to an embodiment of the present application;
FIG. 2 shows a schematic structural diagram of a gas-liquid separator with a single water baffle design according to an embodiment of the present application;
FIG. 3 shows a schematic structural diagram of another gas-liquid separator with a single water baffle design according to an embodiment of the present application;
FIG. 4 shows a gas flow diagram of a gas-liquid separator during gas-liquid separation according to an embodiment of the present application; and
FIG. 5 shows an architectural diagram of a hydrogen subsystem in a fuel cell vehicle according to an embodiment of the present application.

### Reference numerals in the accompanying drawings:

101: gas-liquid separator body; 102: first water baffle; 103: second water baffle; 104: liquid level sensor; 105: first water separation plate; 106: second water separation plate; 107: third water separation plate; 108: fourth water separation plate; 109: nitrogen discharge port; 110: heating nitrogen discharge valve; 111: liquid discharge port; 112: heating liquid discharge valve; 113: inlet; 114:outlet; 2: mixed discharge valve; 3: hydrogen inlet solenoid valve; 4: medium-pressure sensor; 5: proportional valve; 6: ejector; 7: inlet low-pressure sensor; 8: check valve; 9: outlet low-pressure sensor; 10: stack.

### Detailed Description of Embodiments

Now, example implementations will be described more comprehensively with reference to the accompanying drawings. However, the example implementations may be implemented in various forms and should not be construed as being limited to the examples described herein. On the contrary, these implementations are provided so that the present application will be more thorough and complete, and the concepts of the example implementations will be fully conveyed to those skilled in the art.

It should be noted that the terms "first", "second" and the like in the specification, claims, and the aforementioned accompanying drawings of the present application are used to distinguish similar objects, and are not necessarily used to describe a specific order or sequence. It should be understood that such used objects may be interchanged where appropriate, so that the embodiments of the present application described herein can be implemented in sequences other than those illustrated or described.

To clarify the objectives, technical solutions, and advantages of the present application, the technical solutions in the embodiments of the present application will be clearly and completely described below with reference to the accompanying drawings in the embodiments of the present application. Apparently, the described embodiments are only some rather than all of the embodiments of the present application. All other embodiments obtained by a person of ordinary skill in the art based on the embodiments of the present application without creative efforts shall fall within the protection scope of the present application.

Some implementations of the present application will be described below in detail with reference to the accompanying drawings. The embodiments described below and the features thereof may be combined with each other without conflict.

An embodiment of the present application provides a gas-liquid separator. The gas-liquid separator is applied to a fuel cell vehicle. The gas-liquid separator specifically includes:
a gas-liquid separator body, where a gas-liquid separation part and a liquid collecting part are provided in the gas-liquid separator body from top to bottom; at least two water baffles are arranged between the gas-liquid separation part and the liquid collecting part; and
the at least two water baffles are distributed in a staggered manner in a longitudinal direction to form a water passing gap, so that liquid separated by the gas-liquid separation part flows into the liquid collecting part from the water passing gap.

A common projection surface formed by downward projections of the water baffles covers a surface of the liquid collecting part.

**It** may be understood that the gas-liquid separation part is configured to perform gas-liquid separation on the gas flow entering the gas-liquid separator body, and its working principle is as follows: when the gas flow collides with and comes into contact with an object, the liquid contained in the gas flow will separate from the gas flow due to the collision and contact with the object.

It may be understood that the liquid collecting part is configured to collect the liquid separated from the gas flow, and the water baffles are configured to block the liquid in the liquid collecting part. Therefore, in this embodiment, the common projection formed by the downward projections of all the water baffles can completely cover the surface of the liquid collecting part, ensuring that all the water baffles form a closed surface in a transverse direction. When the vehicle is driving on a bumpy road, the water baffles can effectively block the liquid droplets splashing from the liquid collecting part.

It may be understood that this embodiment is not limited to only two water baffles, but may also include three, four, five, or more water baffles. In this embodiment, an overall structure of the gas-liquid separator body is cylindrical. When only two water baffles are arranged in the gas-liquid separator, the two water baffles may be disposed oppositely along a circumferential direction of the gas-liquid separator body, for example, the two water baffles may be arranged on left and right sides of the gas-liquid separator body respectively. When three water baffles are arranged in the gas-liquid separator, the three water baffles may be evenly distributed along a circumferential direction of the gas-liquid separator body, every two adjacent water baffles among the three shall be arranged in a staggered manner in a longitudinal direction to form water passing gaps, and the common projection surface formed by the downward projections of the three water baffles shall cover the surface of the liquid collecting part. When four, five, or more water baffles are arranged in the gas-liquid separator, the arrangement method described above may be referred to: the water baffles shall be arranged along a circumferential direction of the gas-liquid separator body, and during the arrangement of all water baffles, it is necessary to ensure that water passing gaps are formed and the common projection formed by the downward projections of all the water baffles can completely cover the surface of the liquid collecting part.

In some feasible embodiments, the at least two water baffles include a first water baffle and a second water baffle, and ends of the first water baffle and the second water baffle that are close to each other are inclined downward and arranged in a staggered manner, thereby forming the water passing gap.

It may be understood that the purpose of arranging the two water baffles in a downward-inclined manner is to utilize the principle that the liquid droplets move downward due to their own gravity, so as to collect the liquid droplets separated from the gas-liquid separation part and improve the liquid collection efficiency. **If** the water baffles are arranged in parallel, liquid droplet collection can still be achieved, but the collection efficiency is not as high as that when the water baffles are arranged in a downward-inclined manner. In contrast, arranging the water baffles in an upward-inclined manner will cause the formation of a small included angle between the water baffles and an inner wall of the gas-liquid separator, the dripping liquid droplets will accumulate in this included angle, and the liquid can drain into the liquid collecting part only when the accumulated liquid overflows the other end of the water baffles, which is highly inefficient.

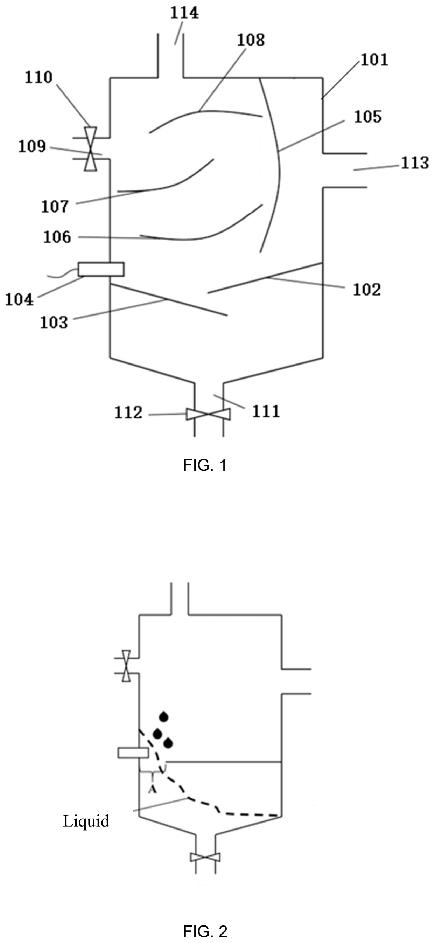

Exemplarily, refer to FIG. 1, which shows a schematic structural diagram of a gas-liquid separator according to an embodiment of the present application. As shown in FIG. 1, a first water baffle 102 and a second water baffle 103 are connected to a gas-liquid separator body 101, and ends of the first water baffle 102 and the second water baffle 103 that are close to each other are arranged in an up-and-down staggered manner. The purpose of arranging the first water baffle 102 and the second water baffle 103 in an up-and-down staggered manner is to ensure that when a vehicle is driving on a bumpy road, the first water baffle 102 and the second water baffle 103 can block splashed liquid. This up-and-down staggered arrangement of the two water baffles enables the first water baffle 102 and the second water baffle 103 to form a closed surface in a horizontal direction while forming a water passing gap in a longitudinal direction.

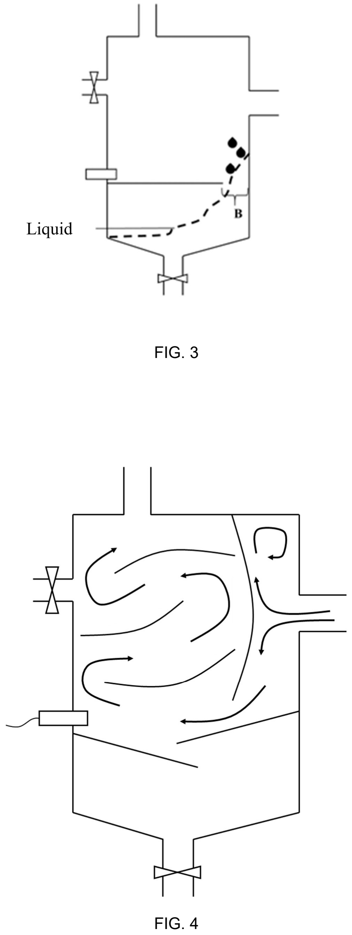

It may be understood that the blocking effect achieved by the first water baffle 102 and the second water baffle 103 is superior to that of a single water baffle. As shown in FIG. 2 and FIG. 3, which respectively shows a gas-liquid separator adopting a single water baffle design. For such a gas-liquid separator with a single water baffle, when a vehicle is driving on an inclined road, liquid droplet splashing tends to occur at an open end A of the single water baffle in FIG. 2 or at an open end B of the single water baffle in FIG. 3. In contrast, the gas-liquid separator with a double-water baffle design offers a better performance in preventing liquid droplets from splashing.

In some feasible embodiments, at least one water separation plate is arranged inside the gas-liquid separation part, the at least one water separation plate forms a communicating flow channel inside the gas-liquid separation part, and the communicating flow channel is used for accelerating gas-liquid separation.

It may be understood that the gas-liquid separation part achieves gas-liquid separation by means of the gas flow colliding with and making contact with objects. The water separation plate arranged inside the gas-liquid separation part can cause the gas flow entering the gas-liquid separation part to have multiple collisions on the water separation plate, thereby improving the separation efficiency.

It may be understood that when only one water separation plate is arranged inside the gas-liquid separation part, the water separation plate and an inner wall of the gas-liquid separator body form a communicating flow channel, and the gas flow continuously collides with and comes into contact with the water separation plate and the inner wall of the gas-liquid separator body in the communicating flow channel, so as to achieve gas-liquid separation. When a plurality of water separation plates are arranged inside the gas-liquid separation part, adjacent water separation plates among the plurality of water separation plates form one part of the communicating flow channels, and the other water separation plates and the inner wall of the gas-liquid separator body form another part of the communicating flow channels.

Of course, no water separation plates may be arranged inside the gas-liquid separation part, and gas-liquid separation can be achieved by means of the inner wall of the gas-liquid separator body. However, the separation efficiency of the gas-liquid separation part with such a structure is extremely low.

The gas-liquid separation part is not limited to being equipped with four water separation plates, and a specific quantity of water separation plates is selected according to the requirements of the gas-liquid separator. However, among the plurality of water separation plates, there must be included water separation plates configured to form vertical separation flow channels as well as water separation plates configured to form horizontal separation flow channels. For example, two water separation plates are arranged in the vertical direction, where the two water separation plates are connected and arranged sequentially from top to bottom; and four water separation plates are arranged in the horizontal direction, which are located on left sides of the two vertically arranged water separation plates and are also arranged sequentially from top to bottom. The vertically arranged water separation plates and a right inner wall of the gas-liquid separator body form the vertical separation flow channels. The horizontally arranged water separation plates either form horizontal separation flow channels with the first water baffle and the second water baffle, or form horizontal separation flow channels with an upper inner wall of the gas-liquid separator body, or form horizontal separation flow channels with other adjacent horizontally arranged water separation plates.

In some feasible embodiments, a first water separation plate, a second water separation plate, a third water separation plate, and a fourth water separation plate are arranged inside the gas-liquid separation part; the first water separation plate is arranged longitudinally and forms a longitudinal flow channel together with a longitudinal inner wall of the gas-liquid separator body; the second water separation plate, the third water separation plate, and the fourth water separation plate are arranged transversely; the second water separation plate and the at least two water baffles form a first transverse flow channel; the third water separation plate and the second water separation plate form a second transverse flow channel; the fourth water separation plate and the third water separation plate form a third transverse flow channel; an transverse inner wall of the gas-liquid separator body and the fourth water separation plate form a fourth transverse flow channel; the longitudinal flow channel, the first transverse flow channel, the second transverse flow channel, the third transverse flow channel, and the fourth transverse flow channel are communicated in sequence, thus forming the communicating flow channel.

Exemplarily, as shown in FIG. 1, a first water separation plate 105, a second water separation plate 106, a third water separation plate 107, and a fourth water separation plate 108 are all welded to front and rear end plates of the gas-liquid separator body 101. The first water separation plate 105 is adjacent to an inlet 13 of the gas-liquid separator body 101, and the fourth water separation plate 108 is adjacent to an outlet 14 of the gas-liquid separator body 101. The function of the four water separation plates is to separate water-entrained hydrogen entering through the inlet 13, the separated liquid drops onto the first water baffle 102 and the second water baffle 103 and then falls into the liquid collecting part, and the separated gas is discharged through the outlet 14.

Among the aforementioned four water separation plates, the first water separation plate 105 is arranged in the vertical direction and forms a longitudinal flow channel together with a right inner wall of the gas-liquid separator body 101; the second water separation plate 106 is arranged in the horizontal direction, is located on a left side of the first water separation plate 105, and forms a first transverse flow channel together with the first water baffle 102 and the second water baffle 103 that are positioned below it; the third water separation plate 107 is arranged in the horizontal direction, is located on the left side of the first water separation plate 105 and above the second water separation plate 106, and forms a second transverse flow channel together with the second water separation plate 106; and the fourth water separation plate 108 is located on the left side of the first water separation plate 105 and above the third water separation plate 107, the fourth water separation plate 108 forms a third transverse flow channel together with the third water separation plate 107 positioned below it. An upper side of the fourth water separation plate 108 is the upper inner wall of the gas-liquid separator body 101, and the fourth water separation plate 108 forms a fourth transverse flow channel together with the upper inner wall of the gas-liquid separator body 101. The longitudinal flow channel, the first transverse flow channel, the second transverse flow channel, the third transverse flow channel, and the fourth transverse flow channel are communicated in sequence to form a communicating flow channel for gas flow separation.

Exemplarily, as shown in FIG. 4, there is showed a gas flow diagram of a gas-liquid separator during gas-liquid separation according to an embodiment of the present application.

The hydrogen that does not participate in reaction at an anode of a fuel cell stack flows in through the inlet 13. The gas flow undergoes a first deflection at the first water separation plate 105: a part of the fluid moves upward, continues to flow downstream after forming a vortex at an upper right corner, and another part of the fluid flows directly downward after deflection. Subsequently, the fluid flows downstream along a flow channel formed by the second water separation plate 106, the first water baffle 102, and the second water baffle 103, and undergoes a second deflection at a wall surface. Subsequently, the fluid passes through a flow channel formed by the second water separation plate 106 and the third water separation plate 107, and undergoes a third deflection at the first water separation plate 105. Subsequently, the fluid passes through a flow channel formed by the third water separation plate 107 and the fourth water separation plate 108, undergoes a fourth deflection at the wall surface, and finally flows out through the outlet 14. Due to inertia, when the fluid undergoes deflection, liquid droplets carried thereby will impinge on the wall surface. The liquid droplets impinging on the wall surface will flow down in the form of drops or streams, eventually reaching the liquid collecting part. They are then discharged out of a fuel cell system when a liquid discharge valve is opened, thus achieving the purpose of gas-liquid separation.

In some feasible embodiments, each of the water separation plates is provided with a drag-reducing curved surface.

Exemplarily, the first water separation plate 105, the second water separation plate 106, the third water separation plate 107, and the fourth water separation plate 108 all adopt a streamlined curve design, ensuring that each water separation plate is provided with a drag-reducing curved surface. The drag-reducing curved surface can reduce a flow resistance of the gas flow passing through the gas-liquid separator and improve the separation efficiency.

In some feasible embodiments, the gas-liquid separator further includes a liquid level detection device. The liquid level detection device is arranged at least above at least one water baffle adjacent to the liquid collecting part.

It may be understood that when a liquid level inside the gas-liquid separator body exceeds a set liquid level, it is necessary to perform drainage on the liquid collecting part. Therefore, a liquid level detection device needs to be mounted to monitor the liquid level inside the gas-liquid separator body in real time.

Exemplarily, referring to FIG. 1, the liquid level detection device may be a liquid level sensor 104. The liquid level sensor 104 is mounted on the gas-liquid separator body 101 and located above the first water baffle 102 or the second water baffle 103.

It may be understood that, to improve the monitoring accuracy, the liquid level detection device may consist of a plurality of liquid level sensors, which can be respectively mounted above different water baffles. For example, in this embodiment, the liquid level detection device is composed of two liquid level sensors, which are respectively located above the first water baffle 102 and the second water baffle 103.

In some feasible embodiments, the liquid level detection device is arranged at least above a connecting end of at least one water baffle adjacent to the liquid collecting part, and the connecting end refers to one end where the at least one water baffle is connected to the gas-liquid separator body.

Exemplarily, referring to FIG. 1, in this embodiment, one liquid level sensor 104 and two water baffles (102 and 103) are provided in total. The liquid level sensor 104 is mounted above a connecting end of the second water baffle 103 and is immediately adjacent to the connecting end of the second water baffle 103. When liquid in the liquid collecting part gradually accumulates and the liquid level exceeds the position of the liquid level sensor 104, the liquid level sensor 104 sends a liquid level signal, and a corresponding control system receives the signal and controls the gas-liquid separator to perform drainage.

It may be understood that mounting the liquid level sensor 104 above the connecting end of the water baffle can prevent misjudgment of the liquid level sensor. Exemplarily, as shown in FIG. 2, if the liquid level sensor 104 is mounted below the water baffle or at a connecting end A of the water baffle, when a vehicle is driving on an inclined or bumpy road, the inclination and fluctuation of the liquid level in the liquid collecting part may lead to misjudgment of the liquid level sensor. Mounting the liquid level sensor 104 above a closed end of the water baffle can prevent the occurrence of misjudgment of the sensor to a certain extent.

Specifically, a mounting point of the liquid level sensor 104 is located above the connecting end of the second water baffle 103, and is connected to the gas-liquid separator body 101 in a threaded connection manner. The connection location is provided with an axial sealing ring to prevent hydrogen leakage.

In some feasible embodiments, a nitrogen discharge port is opened on one side of the gas-liquid separation part; a nitrogen discharge control assembly is arranged on the nitrogen discharge port, and the nitrogen discharge control assembly at least includes a heating nitrogen discharge valve.

As shown in FIG. 1, a nitrogen discharge port 109 is opened on a left side wall of the gas-liquid separator body 101, and the nitrogen discharge control assembly is mounted on the nitrogen discharge port 109.

Specifically, in this embodiment, the nitrogen discharge control assembly includes a heating nitrogen discharge valve 110. A heating nitrogen discharge valve connector is mounted on the nitrogen discharge port 109, and the heating nitrogen discharge valve 110 is connected to the heating nitrogen discharge valve connector in a threaded connection manner.

It may be understood that the heating nitrogen discharge valve connector adopts an internal thread, and an axial sealing ring is arranged at the connection location with the heating nitrogen discharge valve 110 to prevent hydrogen leakage.

It may be understood that the heating nitrogen discharge valve 110 is a switching valve. To prevent the valve from failing to open due to freezing of condensed water at the outlet of the nitrogen discharge valve, which would lead to failure of low-temperature startup of the fuel cell system, an annular electric heating coil is installed at the valve outlet.

It should be noted that the electric heating coil is a heating device composed of electric heating alloy wires as heating materials and flexible mica plates (or ceramic cores in some cases) as insulating materials. The working principle of the electric heating coil is as follows: High-frequency and high-amperage current flows through the heating coil (usually made of red copper tubes), which is wound into an annular or other shape. This generates a strong magnetic flux with instant polarity changes inside the coil. When a heated object such as a metal is placed inside the coil, the magnetic flux will pass through the entire heated object. A correspondingly large eddy current is produced inside the heated object in a direction opposite to the heating current. Since there is resistance within the heated object, a large amount of Joule heat is generated, causing the temperature of the object itself to rise rapidly, thus achieving the purpose of heating all metal materials.

In some feasible embodiments, a liquid discharge port is opened on one side of the liquid collecting part; a liquid discharge control assembly is arranged on the liquid discharge port, and the liquid discharge control assembly at least includes a heating liquid discharge valve.

Exemplarily, as shown in FIG. 1, in this embodiment, the bottom of the liquid collecting part is conical. Therefore, a liquid discharge port 111 is formed at the bottom of the liquid collecting part to ensure that liquid inside the liquid collecting part can be completely drained. If the bottom of the liquid collecting part is a horizontal flat bottom, the liquid discharge port may be formed on a left or right side adjacent to the bottom of the liquid collecting part, which can also enable complete drainage of the liquid inside the liquid collecting part.

Specifically, in this embodiment, the liquid discharge control assembly is mounted on the liquid discharge port 111. The liquid discharge control assembly includes a heating liquid discharge valve 112. A heating liquid discharge valve connector is mounted on the liquid discharge port 111, and the heating liquid discharge valve 112 is connected to the heating liquid discharge valve connector in a threaded connection manner.

It may be understood that the heating liquid discharge valve connector adopts an internal thread, and an axial sealing ring is arranged at the connection location with the heating liquid discharge valve 112 to prevent hydrogen leakage.

It may be understood that the heating liquid discharge valve 112 is a switching valve. To prevent the valve from failing to open due to freezing of accumulated water at the outlet of the liquid discharge valve, which would lead to failure of low-temperature startup of the fuel cell system, an annular electric heating coil is installed at the valve outlet.

It should be noted that the electric heating coil is a heating device composed of electric heating alloy wires as heating materials and flexible mica plates (or ceramic cores in some cases) as insulating materials. The working principle of the electric heating coil is as follows: High-frequency and high-amperage current flows through the heating coil (usually made of red copper tubes), which is wound into an annular or other shape. This generates a strong magnetic flux with instant polarity changes inside the coil. When a heated object such as a metal is placed inside the coil, the magnetic flux will pass through the entire heated object. A correspondingly large eddy current is produced inside the heated object in a direction opposite to the heating current. Since there is resistance within the heated object, a large amount of Joule heat is generated, causing the temperature of the object itself to rise rapidly, thus achieving the purpose of heating all metal materials.

As a second aspect, the present application further provides a drainage control method for the gas-liquid separator. The method is used to control the gas-liquid separator described in the embodiments of the present application, and the method includes:
acquiring a liquid level signal inside the gas-liquid separator body; if a liquid level inside the gas-liquid separator body exceeds a preset liquid level, controlling the liquid collecting part to perform drainage; and
acquiring a sudden pressure drop signal inside the gas-liquid separator body, and controlling the liquid collecting part to stop drainage according to the sudden pressure drop signal.

It may be understood that in this embodiment, the liquid level signal of the liquid collecting part is acquired by a liquid level sensor 104, and the sudden pressure drop signal can be acquired by arranging a pressure sensor.

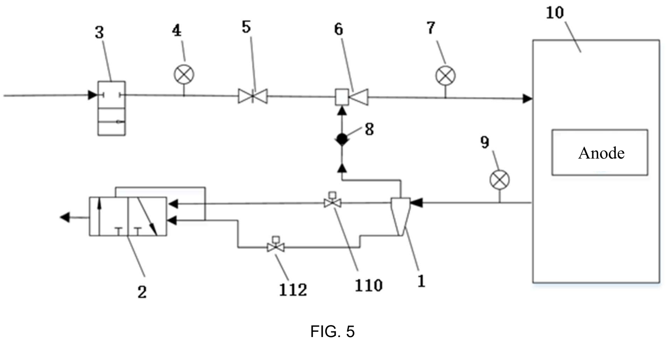

Exemplarily, as shown in FIG. 5, which shows an architectural diagram of a hydrogen subsystem in a fuel cell vehicle to which the gas-liquid separator of this embodiment is applied. Specifically, the hydrogen subsystem includes the following components: a gas-liquid separator 1, a heating nitrogen discharge valve 110, a heating liquid discharge valve 112, a mixed discharge valve 2, a hydrogen inlet solenoid valve 3, a medium-pressure sensor 4, a proportional valve 5, an ejector 6, an inlet low-pressure sensor 7, a check valve 8, an outlet low-pressure sensor 9, and a stack 10.

During the operation of the fuel cell, hydrogen in a hydrogen storage tank enters the stack 10 through the hydrogen inlet solenoid valve 9, the proportional valve 5, and the ejector 6. The incompletely reacted hydrogen mixed with water vapor and nitrogen is discharged from an anode outlet of the stack, then passes through the gas-liquid separator 1 and the check valve 8, and enters a secondary flow inlet of the ejector 6, thus achieving cyclic utilization of the hydrogen. The accumulated water in the liquid collecting part inside the gas-liquid separator 1 gradually increases over time. When a liquid level in the liquid collecting part exceeds the liquid level sensor 104, a controller of the fuel cell system sends a drainage signal, the heating liquid discharge valve 112 is opened, and the system enters a drainage phase. When the water in the liquid collecting part is completely drained, the hydrogen in the pipeline will be discharged from the liquid discharge port 111, and the gas pressure in the pipeline will drop suddenly. When the outlet low-pressure sensor 9 arranged at a stack outlet detects the sudden pressure drop signal in the pipeline and the amount of gas pressure drop exceeds 2.5 kPa, the fuel cell controller sends a signal to close the liquid discharge valve, the heating liquid discharge valve 112 is closed, and a drainage cycle is completed.

A traditional control method of directly calibrating a drainage cycle duration has the disadvantages of short drainage cycle and low hydrogen utilization efficiency when a fuel cell is operating dynamically. In contrast, the drainage control method based on signals from the liquid level sensor and the pressure sensor allows the drainage cycle duration to be dynamically adjusted according to changes of operation conditions, realizing adaptive control of the drainage cycle. This method features higher robustness and higher hydrogen saving rate during the dynamic operation of the fuel cell.

Other implementations of the present application will readily occur to those skilled in the art upon consideration of the specification and practice of the implementations disclosed herein. The present application is intended to cover any variations, uses, or adaptations of the present application, which follow the general principles of the present application and include common general knowledge or conventional technical means in the technical field not disclosed herein. It should be understood that the present application is not limited to the precise structures described above and illustrated in the accompanying drawings, and various modifications and changes may be made without departing from the scope thereof. The scope of the present application is limited only by the appended claims.

## Claims

1. A gas-liquid separator, **characterized by** comprising:
a gas-liquid separator body, wherein a gas-liquid separation part and a liquid collecting part are provided in the gas-liquid separator body from top to bottom; at least two water baffles are arranged between the gas-liquid separation part and the liquid collecting part; and
the at least two water baffles are distributed in a staggered manner in a longitudinal direction to form a water passing gap, so that liquid separated by the gas-liquid separation part flows into the liquid collecting part from the water passing gap;
wherein a common projection surface formed by downward projections of the water baffles covers a surface of the liquid collecting part.

2. The gas-liquid separator according to claim 1, **characterized in that** the at least two water baffles comprise a first water baffle and a second water baffle, and ends of the first water baffle and the second water baffle that are close to each other are inclined downward and arranged in a staggered manner, thereby forming the water passing gap.

3. The gas-liquid separator according to claim 1, **characterized in that** at least one water separation plate is arranged inside the gas-liquid separation part, the at least one water separation plate forms a communicating flow channel inside the gas-liquid separation part, and the communicating flow channel is used for accelerating gas-liquid separation.

4. The gas-liquid separator according to claim 3, **characterized in that** a first water separation plate, a second water separation plate, a third water separation plate, and a fourth water separation plate are arranged inside the gas-liquid separation part; the first water separation plate is arranged longitudinally and forms a longitudinal flow channel together with a longitudinal inner wall of the gas-liquid separator body; the second water separation plate, the third water separation plate, and the fourth water separation plate are arranged transversely; the second water separation plate and the at least two water baffles form a first transverse flow channel; the third water separation plate and the second water separation plate form a second transverse flow channel; the fourth water separation plate and the third water separation plate form a third transverse flow channel; an transverse inner wall of the gas-liquid separator body and the fourth water separation plate form a fourth transverse flow channel; the longitudinal flow channel, the first transverse flow channel, the second transverse flow channel, the third transverse flow channel, and the fourth transverse flow channel are communicated in sequence, thus forming the communicating flow channel.

5. The gas-liquid separator according to claim 3, **characterized in that** each of the water separation plates is provided with a drag-reducing curved surface.

6. The gas-liquid separator according to any one of claims 1 to 5, **characterized by** further comprising a liquid level detection device arranged at least above at least one water baffle adjacent to the liquid collecting part.

7. The gas-liquid separator according to claim 6, **characterized in that** the liquid level detection device is arranged at least above a connecting end of at least one water baffle adjacent to the liquid collecting part, and the connecting end refers to one end where the at least one water baffle is connected to the gas-liquid separator body.

8. The gas-liquid separator according to any one of claims 1 to 5, **characterized in that** a nitrogen discharge port is opened on one side of the gas-liquid separation part; a nitrogen discharge control assembly is arranged on the nitrogen discharge port, and the nitrogen discharge control assembly at least comprises a heating nitrogen discharge valve.

9. The gas-liquid separator according to any one of claims 1 to 5, **characterized in that** a liquid discharge port is opened on one side of the liquid collecting part; a liquid discharge control assembly is arranged on the liquid discharge port, and the liquid discharge control assembly at least comprises a heating liquid discharge valve.

10. A drainage control method applied to the gas-liquid separator according to any one of claims 1 to 9, **characterized in that** the method comprises:
acquiring a liquid level signal inside the gas-liquid separator body; if a liquid level inside the gas-liquid separator body exceeds a preset liquid level, controlling the liquid collecting part to perform drainage; and
acquiring a sudden pressure drop signal inside the gas-liquid separator body, and
controlling the liquid collecting part to stop drainage according to the sudden pressure drop signal.
